# EUROPEAN PATENT APPLICATION

(11) **EP 4 737 243 A1**
(43) Date of publication of application: **06.05.2026**
(21) Application number: 24761689.9
(22) Date of filing: 04.06.2024
(51) Int. Cl.: B60W 30/14, B60W 30/16, B60W 30/17, B60W 30/18, B60W 50/10, B60W 50/12, B60Q 9/00, B60W 50/14

(54) **CONTROL DEVICE AND CONTROL METHOD FOR RIDER ASSISTANCE SYSTEM**

(30) Priority: 27.06.2023 JP 2023105364
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2024/055423
(87) International publication number: WO 2025/003800

(57) **Abstract**

The invention obtains a controller and a control method capable of improving assistance performance for a rider.

A controller for a rider-assistance system includes an execution section that executes at least one of first automatic action and second automatic action. In the first automatic action, a lean vehicle is automatically stopped on the basis of operation state information, which is information on an operation state by a rider, in a second state where a reference section (P0) of an accelerator grip (120) is located within a second angle range (θ2). The reference section (P0) of the accelerator grip (120) is located at a reference angle (A0) in an unloaded state by the rider of the lean vehicle, and the accelerator grip (120) causes a change in drive power generated to the lean vehicle when being rotated in a state where the reference section (P0) is located within a first angle range (θ1).

## Description

### Technical Field

The present invention relates to a controller for a rider-assistance system of a lean vehicle and to a control method for a rider-assistance system of a lean vehicle.

### Background Art

One type of conventional rider-assistance systems executes vehicle speed control action to automatically control a vehicle speed generated to a lean vehicle (for example, see PTL 1).

### Citation List

### Patent Literature

PTL 1: WO2018/197965A1

### Summary of Invention

### Technical Problem

It has been known that a different vehicle from the lean vehicle (for example, a passenger car or the like) executes first automatic action to automatically stop the vehicle in the case where it is determined that there is a necessity to stop the traveling vehicle in an executed state of the vehicle speed control action. It has also been known that the different vehicle from the lean vehicle (for example, the passenger car or the like) executes second automatic action to automatically start or accelerate the vehicle in the case where it is determined that there is a necessity to start the vehicle in a state where the vehicle has been brought to a stop, or in the case where it is determined that there is a necessity to accelerate the vehicle in a process of bringing the vehicle to the stop. A posture of the lean vehicle becomes extremely unstable with a reduction in the vehicle speed. When at least one of the first automatic action and the second automatic action is executed in the lean vehicle, a rider has to perform an operation for such action while stabilizing the posture of the lean vehicle. For this reason, when at least one of the first automatic action and the second automatic action is executed in the lean vehicle, the operation for such action has to be simplified for the rider.

The invention has been made with the above-described problem as the background and therefore obtains a controller capable of improving assistance performance for a rider. The invention also obtains a control method capable of improving the assistance performance for the rider. Solution to Problem

A controller according to the invention is a controller for a rider-assistance system of a lean vehicle, and includes an execution section that executes vehicle speed control action to automatically control a vehicle speed generated to the lean vehicle. The execution section executes at least one of first automatic action to automatically stop the lean vehicle and second automatic action to automatically start or accelerate the lean vehicle. The first automatic action is action that is executed in the case where it is determined that there is a necessity to stop the traveling lean vehicle in an executed state of the vehicle speed control action. The second automatic action is action that is executed in the case where it is determined that there is a necessity to start the lean vehicle in a state where the lean vehicle has been brought to a stop, or in the case where it is determined that there is a necessity to accelerate the lean vehicle in a process of bringing the lean vehicle to the stop. The execution section executes at least one of the actions on the basis of operation state information, which is information on an operation state by a rider, in a second state where a reference section of an accelerator grip is located within a second angle range that is located in a second direction opposite from a first direction with a reference angle being a reference. The reference section of the accelerator grip is located at the reference angle in an unloaded state by the rider of the lean vehicle, and the accelerator grip causes a change in drive power generated to the lean vehicle when being rotated in a first state where the reference section is located within a first angle range that is located in the first direction with the reference angle being the reference.

A control method according to the invention is a control method for a rider-assistance system of a lean vehicle, and includes: executing vehicle speed control action by an execution section of a controller, in the vehicle speed control action, a vehicle speed generated to the lean vehicle being automatically controlled; and executing at least one of first automatic action and second automatic action by the execution section, in the first automatic action, the lean vehicle being automatically stopped, and in the second automatic action, the lean vehicle being automatically started or accelerated. The first automatic action is action that is executed in the case where it is determined that there is a necessity to stop the traveling lean vehicle in an executed state of the vehicle speed control action. The second automatic action is action that is executed in the case where it is determined that there is a necessity to start the lean vehicle in a state where the lean vehicle has been brought to a stop, or in the case where it is determined that there is a necessity to accelerate the lean vehicle in a process of bringing the lean vehicle to the stop. The execution section executes at least one of the actions on the basis of operation state information, which is information on an operation state by a rider, in a second state where a reference section of an accelerator grip is located within a second angle range that is located in a second direction opposite from a first direction with a reference angle being a reference. The reference section of the accelerator grip is located at the reference angle in an unloaded state by the rider of the lean vehicle, and the accelerator grip causes a change in drive power generated to the lean vehicle when being rotated in a first state where the reference section is located within a first angle range that is located in the first direction with the reference angle being the reference.

### Advantageous Effects of Invention

In the controller and the control method according to the invention, the execution section executes at least one of the first automatic action and the second automatic action on the basis of the operation state information, which is the information on the operation state by the rider, in the second state where the reference section of the accelerator grip is located within the second angle range that is located in the second direction opposite from the first direction with the reference angle being the reference. The reference section of the accelerator grip is located at the reference angle in the unloaded state by the rider of the lean vehicle, and the accelerator grip causes the change in the drive power generated to the lean vehicle when being rotated in the first state where the reference section is located within a first angle range that is located in the first direction with the reference angle being the reference. Thus, since the rider can easily perform an operation for the action, assistance performance for the rider can be improved.

### Brief Description of Drawings

Fig. 1 is a view illustrating a mounted state of a rider-assistance system according to an embodiment of the invention to a lean vehicle.
Fig. 2 is a diagram illustrating a system configuration of the rider-assistance system according to the embodiment of the invention.
Fig. 3 is a view for explaining a configuration of the rider-assistance system according to the embodiment of the invention.
Fig. 4 is a view for explaining a configuration of an accelerator grip in the rider-assistance system according to the embodiment of the invention.
Fig. 5 is a chart illustrating an action flow of a controller for the rider-assistance system according to the embodiment of the invention.

### Description of Embodiments

A description will hereinafter be made on a controller and a control method according to the invention with reference to the drawings.

A configuration, action, and the like, which will be described below, merely constitute one example, and the controller and the control method according to the invention are not limited to a case with such a configuration, such action, and the like.

For example, a description will hereinafter be made on a case where the controller and the control method according to the invention are applied to a two-wheeled motorcycle. However, the controller and the control method according to the invention may be applied to a lean vehicle other than the two-wheeled motorcycle. The lean vehicle means a vehicle in general that travels in a tilted state in a turning direction during a turn. Examples of the lean vehicle are the two-wheeled motorcycle, a three-wheeled motorcycle, and a bicycle. The motorcycles include a vehicle that has an engine as a propelling source, a vehicle that has an electric motor as the propelling source, and the like, for example. Examples of the motorcycle are a bike, a scooter, and an electric scooter. The bicycle means a vehicle in general that can travel forward on a road by a depression force applied to pedals by a rider. Examples of the bicycle are a normal bicycle, an electrically-assisted bicycle, and an electric bicycle.

The same or similar description will appropriately be simplified or will not be made below. In the drawings, the same or similar portions will be denoted by the same reference sign or will not be denoted by a reference sign. A detailed structure will appropriately be illustrated in a simplified manner or will not be illustrated.

### Embodiment

A description will hereinafter be made on a rider-assistance system according to an embodiment.

### <Configuration of Rider-Assistance System>

A description will be made on a configuration of the rider-assistance system according to the embodiment.

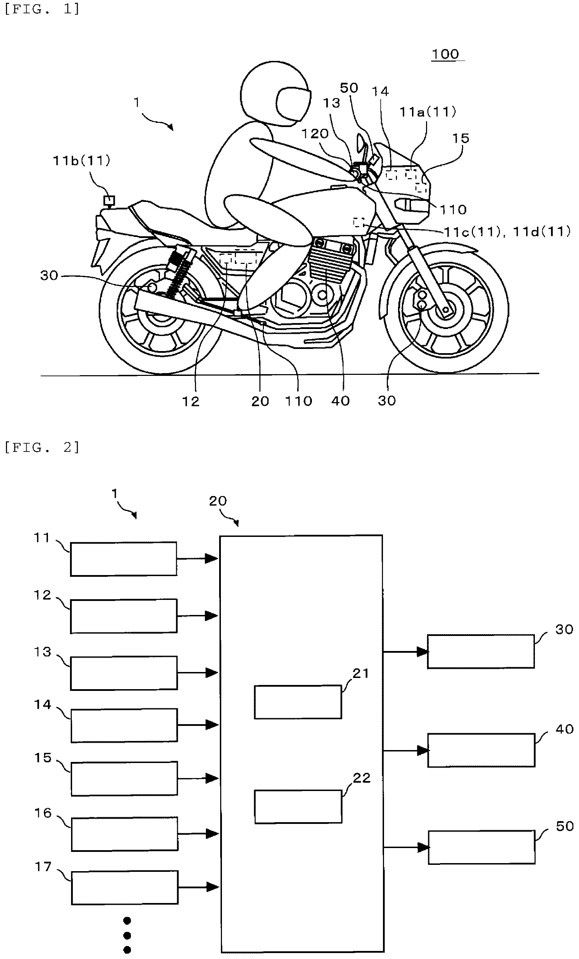

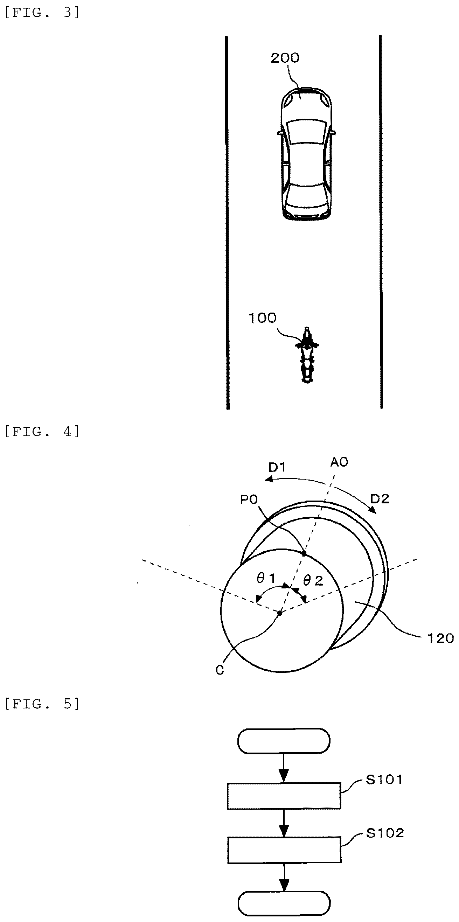

Fig. 1 is a view illustrating a mounted state of the rider-assistance system according to the embodiment of the invention to a lean vehicle. Fig. 2 is a diagram illustrating a system configuration of the rider-assistance system according to the embodiment of the invention. Fig. 3 is a view for explaining a configuration of the rider-assistance system according to the embodiment of the invention. Fig. 4 is a view for explaining a configuration of an accelerator grip in the rider-assistance system according to the embodiment of the invention.

As illustrated in Fig. 1 and Fig. 2, a rider-assistance system 1 is mounted to a lean vehicle 100. For example, the rider-assistance system 1 includes a surrounding environment sensor 11, a vehicle behavior sensor 12, a setting input device 13, a communication device 14, a positioning sensor 15, a brake operation section sensor 16, an accelerator grip sensor 17, a controller (ECU) 20, a brake system 30, a drive system 40, and a notification device 50 when necessary.

In the rider-assistance system 1, the controller 20 executes rider-assistance action to assist a rider of the lean vehicle 100 in driving by using output of the surrounding environment sensor 11, the vehicle behavior sensor 12, the setting input device 13, the communication device 14, the positioning sensor 15, the brake operation section sensor 16, and/or the accelerator grip sensor 17. The controller 20 executes the rider-assistance action by outputting control commands to various devices (for example, the brake system 30, the drive system 40, the notification device 50, and the like). The controller 20 receives output of various sensors (not illustrated) for detecting other types of information when necessary. Each component of the rider-assistance system 1 may exclusively be used for the rider-assistance system 1 or may be shared with another system.

The surrounding environment sensor 11 at least includes a detection section 11a that detects surrounding environment in front of the lean vehicle 100. The surrounding environment sensor 11 may include a detection section 11b that detects the surrounding environment behind the lean vehicle 100, may include a detection section 11c that detects the surrounding environment to the left of the lean vehicle 100, or may include a detection section 11d that detects the surrounding environment to the right of the lean vehicle 100. Each of the detection sections 11a, 11b, 11c, 11d is a radar, a Lidar sensor, an ultrasonic sensor, a camera, or the like, for example. At least a part of each of the detection section 11c and the detection section 11d may be substituted by the detection section 11a or the detection section 11b.

Examples of the vehicle behavior sensor 12 are a vehicle speed sensor and an inertial measurement unit (IMU). The vehicle speed sensor detects a vehicle speed that is generated to the lean vehicle 100. The vehicle speed sensor may detect another physical quantity that can substantially be converted to the vehicle speed generated to the lean vehicle 100. The IMU detects acceleration in three axes (a front-rear direction, a vehicle width direction, and a vehicle height direction) and angular velocities in three axes (roll, pitch, and yaw) generated to the lean vehicle 100. The inertial measurement unit may detect other physical quantities that can substantially be converted to the three-axis acceleration and the three-axis angular velocities generated to the lean vehicle 100. Alternatively, the IMU may partially detect the three-axis acceleration and the three-axis angular velocities.

The setting input device 13 accepts the rider's operations to input various settings. For example, the rider can switch to enable or disable any of various types of the rider-assistance action by using the setting input device 13. In addition, for example, the rider can set various modes or various control parameters (for example, allowable values or the like) that are used in the various types of the rider-assistance action by using the setting input device 13. The setting input device 13 may accept an operation by the rider's body (for example, a hand, a foot, or the like) or may accept voice produced by the rider. In addition, the setting input device 13 may be provided to the lean vehicle 100 or may be provided to an accessory (for example, a helmet, a glove, or the like) that is associated with the lean vehicle 100.

The communication device 14 wirelessly communicates with another communication device that is provided to a surrounding vehicle around the lean vehicle 100 and/or with another communication device that is provided to a road facility (for example, a traffic light, a traffic sign, a guardrail, a utility pole, or the like). For example, the other communication device that is provided to the surrounding vehicle transmits, to the communication device 14, travel state information of the surrounding vehicle detected by the surrounding vehicle, surrounding environment information of the surrounding vehicle detected by the surrounding vehicle, and the like. For example, the other communication device that is provided to the road facility transmits, to the communication device 14, state information of the road facility, surrounding environment information of the road facility detected by the road facility, and the like.

The positioning sensor 15 receives positioning signals that are transmitted from plural communications satellites to detect positional information of the lean vehicle 100 on a global coordinate system. The position of the lean vehicle 100 is matched against map information, and the positional information of the lean vehicle 100 on the map is thereby acquired.

The brake operation section sensor 16 detects operation state information of a brake operation section 110 that is an operation section (for example, a brake lever, a brake pedal, or the like) of the brake system 30 operated by the rider. The operation state information is information on a physical quantity (for example, presence or absence of the operation, an operation amount, a gradient of a change in the operation amount, or the like) that is associated with the operation of the brake operation section 110. The brake operation section sensor 16 may detect information on another physical quantity that can substantially be converted to the physical quantity associated with the operation of the brake operation section 110.

The accelerator grip sensor 17 detects operation state information of an accelerator grip 120 that is an operation section of the drive system 40 operated by the rider. The operation state information is information on a physical quantity (for example, presence or absence of rotation, a direction of the rotation, a rotational amount, a gradient of a change in the rotational amount, or the like) that is associated with the operation of the accelerator grip 120. The accelerator grip sensor 17 may detect information on another physical quantity that can substantially be converted to the physical quantity associated with the operation of the accelerator grip 120.

The controller 20 at least includes an acquisition section 21 and an execution section 22. A whole or each of the sections of the controller 20 may collectively be provided in a single casing or may separately be provided in plural casings. In addition, a whole or each of the section of the controller 20 may be a microcomputer, a microprocessor unit, or the like, may be one whose firmware or the like can be updated, or may be a program module or the like that is executed by a command from a CPU or the like, for example.

The acquisition section 21 acquires the surrounding environment information of the lean vehicle 100 on the basis of output of the surrounding environment sensor 11. The surrounding environment information includes positional relationship information between the lean vehicle 100 and a target that is located around the lean vehicle 100 (for example, a vehicle, an obstacle, a road facility, a person, an animal, or the like). Examples of the positional relationship information are the information on a relative position, a relative distance, a relative speed, relative acceleration, relative jerk, a passing time difference, and a predicted time until a collision. The positional relationship information may be information on another physical quantity that can substantially be converted to one of those. The surrounding environment information includes characteristic information of the target that is located around the lean vehicle 100 (for example, the vehicle, the obstacle, the road facility, the person, the animal, or the like). Examples of the characteristic information are traffic light information that is information on a state of the traffic light, stop line information that is information on presence or absence and/or a location of a stop line drawn on a road, traffic sign information that is information on presence or absence and/or a location of a traffic sign that instructs to stop, and traffic information that is information on presence or absence of traffic jam, construction work, and/or an accident and/or on a location thereof. The characteristic information may be information on another physical quantity that can substantially be converted to one of those. The acquisition section 21 may acquire the surrounding environment information of the lean vehicle 100 on the basis of output of the communication device 14.

The execution section 22 executes, as the rider-assistance action, vehicle speed control action of the lean vehicle 100 on the basis of the surrounding environment information (in particular, the positional relationship information) that is acquired by the acquisition section 21. When executing the vehicle speed control action, the execution section 22 outputs the control command to the brake system 30 or the drive system 40. The brake system 30 brakes the lean vehicle 100. The drive system 40 as a power source of the lean vehicle 100 drives the lean vehicle 100. The brake system 30 may be controlled to generate or increase deceleration, or may be controlled to generate or increase the acceleration. The drive system 40 may be controlled to generate or increase the acceleration, or may be controlled to generate or increase the deceleration.

When executing the rider-assistance action, the execution section 22 outputs the control command to the notification device 50 as necessary. The notification device 50 may warn or notify the rider of the information by display (that is, a sensation through a visual organ as a sensory organ), may warn or notify the rider of the information by sound (that is, a sensation through an auditory organ as the sensory organ), or may warn or notify the rider of the information by vibration (that is, a sensation through a tactile organ as the sensory organ). Examples of the notification device 50 is a display, a lamp, a speaker, and a vibrator. The notification device 50 may be provided to the lean vehicle 100 or may be provided to the accessory (for example, the helmet, the glove, or the like) that is associated with the lean vehicle 100. In addition, notification action may warn or notify the rider of the information by generating the instantaneous deceleration or acceleration to the lean vehicle 100. That is, the brake system 30 or the drive system 40 may constitute the notification device 50.

As illustrated in Fig. 3, in the vehicle speed control action, the execution section 22 identifies a preceding vehicle 200, which establishes a predetermined positional relationship with the lean vehicle 100, as a target. Then, the execution section 22 controls the vehicle speed of the lean vehicle 100 on the basis of positional relationship information between the lean vehicle 100 and the preceding vehicle 200, which is identified as the target. Here, positional relationship information between the lean vehicle 100 and a surrounding vehicle that differs from the preceding vehicle 200 and is located around the lean vehicle 100 may be taken into consideration. The positional relationship between the lean vehicle 100 and the preceding vehicle 200, which is identified as the target, is adjusted by controlling the vehicle speed of the lean vehicle 100.

Here, as illustrated in Fig. 4, the accelerator grip 120 has a substantially cylindrical shape or a substantially columnar shape and can rotate about an axis C. Here, Fig. 4 illustrates a state of the accelerator grip 120 that is seen from a right side of the lean vehicle 100. The accelerator grip 120 is structured to return to a reference state, that is, a state where a reference section P0 is located at a reference angle A0 in an unloaded state by the rider, that is, a state where the accelerator grip 120 does not receive a load from the outside. Such a structure can be implemented by using a restoring force of a spring or the like, for example. That is, the accelerator grip 120 is structured that the reference section P0 is located at the reference angle A0 in the unloaded state by the rider.

When the above-described vehicle speed control action is not executed, and when the accelerator grip 120 is rotated in a first state, drive power that is generated to the lean vehicle 100 is changed. In the first state, the reference section P0 is located within a first angle range θ1 that is located in a first direction D1 (a counterclockwise direction when seen from the right side of the lean vehicle 100) with the reference angle A0 being a reference. More specifically, when the reference section P0 is located at the reference angle A0, the drive power is minimized, or the drive power is not generated. Then, the rider can increase the drive power generated to the lean vehicle 100 or can generate the drive power to the lean vehicle 100 by rotating the accelerator grip 120 in the first direction D1 from the reference state. The drive power that is generated to the lean vehicle 100 is increased as a rotation angle of the reference section P0 with respect to the reference angle A0 is increased. That is, in the case where the accelerator grip 120 is rotated in the first state where the reference section P0 is located within the first angle range θ1 that is located in the first direction D1 with the reference angle A0 being the reference, the drive power is increased when the accelerator grip 120 is rotated in the first direction D1, and the drive power is reduced when the accelerator grip 120 is rotated in a second direction D2 (a clockwise direction when seen from the right side of the lean vehicle 100) that is an opposite direction from the first direction D1.

In addition, the accelerator grip 120 is structured that the reference section P0 can be rotated to a second angle range θ2 located in the second direction D2 with the reference angle A0 being the reference. In the case where the above-described vehicle speed control action is not executed, the drive power that is generated to the lean vehicle 100 is not changed, or the drive power is not generated to the lean vehicle 100 even when the accelerator grip 120 is rotated in a second state where the reference section P0 is located within the second angle range θ2 that is located in the second direction D2 with the reference angle A0 being the reference. The first angle range θ1 and the second angle range θ2 do not overlap each other in a circumferential direction of the axis C.

Preferably, the vehicle speed control action is adaptive cruise control action that sets the preceding vehicle 200 as a target for speed tracking. When the preceding vehicle 200, which is identified as the target, is not present, the lean vehicle 100 is controlled such that the vehicle speed thereof approaches a vehicle speed set by the rider while the adaptive cruise control action remains enabled.

Preferably, in the vehicle speed control action, the brake system 30 is actuated to adjust the positional relationship between the lean vehicle 100 and the preceding vehicle 200, which is identified as the target, to a positional relationship corresponding to the rotational amount of the accelerator grip 120 in a state where the rider rotates the accelerator grip 120 from the reference state to the first state. When the preceding vehicle 200, which is identified as the target, is not present, the action is disabled, and the drive power that corresponds to the rotational amount is generated to the lean vehicle 100.

In the case where the vehicle speed generated to the lean vehicle 100 is reduced to the reference speed in the vehicle speed control action, the execution section 22 causes the lean vehicle 100 to continue traveling at the reference speed even in a situation where the preceding vehicle 200, which is identified as the target, continues to be decelerated. The reference speed may be a fixed value or may be a variable that is appropriately set according to the travel state (for example, a gear stage used in a transmission, a body posture during the travel, or the like) of the lean vehicle 100. The execution section 22 preferably cancels the vehicle speed control action when travel at the reference speed continues for a reference time or longer or a reference distance or longer in the situation where the preceding vehicle 200 identified as the target continues to be decelerated.

The execution section 22 executes first automatic action to automatically stop the lean vehicle 100 in the case where it is determined that there is a necessity to stop the traveling lean vehicle 100 in an executed state of the vehicle speed control action. In addition, the execution section 22 executes second automatic action to automatically start or accelerate the lean vehicle 100 in the case where it is determined that there is a necessity to start the lean vehicle 100 in a state where the lean vehicle 100 has been brought to a stop particularly by the first automatic action, or in the case where it is determined that there is a necessity to accelerate the lean vehicle 100 in a process of bringing the lean vehicle 100 to the stop particularly by the first automatic action. When the vehicle speed that is generated to the lean vehicle 100 exceeds the reference speed, the execution section 22 preferably cancels the second automatic action and restarts the vehicle speed control action. The execution section 22 determines presence or absence of the necessity to stop the lean vehicle 100 on the basis of presence or absence of the rider's intention to stop the lean vehicle 100. The execution section 22 determines presence or absence of the necessity to start or accelerate the lean vehicle 100 on the basis of presence or absence of the rider's intention to start or accelerate the lean vehicle 100. Here, the execution section 22 executes at least one of the first automatic action and the second automatic action on the basis of the operation state information, which is information on the operation state by the rider, in the second state where the reference section P0 of the accelerator grip 120 is located within the second angle range θ2 that is located in the second direction D2 with the reference angle A0 being the reference.

For example, the execution section 22 determines whether there is the necessity to stop the lean vehicle 100 on the basis of the operation state information, which is the information on the operation state by the rider, in the second state where the reference section P0 of the accelerator grip 120 is located within the second angle range θ2 that is located in the second direction D2 with the reference angle A0 being the reference. Then, in the case where it is determined that there is the necessity to stop the lean vehicle 100, the execution section 22 initiates the first automatic action. In the case where the rider rotates the accelerator grip 120 from the reference state to the second state in the executed state of the vehicle speed control action, the execution section 22 preferably determines that there is the necessity to stop the lean vehicle 100. Such a determination is made on the basis of the output of the accelerator grip sensor 17. Here, the execution section 22 may determine whether there is the necessity to stop the lean vehicle 100 on the basis of information on another type of the rider's operation of the accelerator grip 120 or on the basis of information on the rider's operation of the device other than the accelerator grip 120.

For example, the execution section 22 determines whether there is the necessity to start or accelerate the lean vehicle 100 on the basis of the operation state information, which is the information on the operation state by the rider, in the second state where the reference section P0 of the accelerator grip 120 is located within the second angle range θ2 that is located in the second direction D2 with the reference angle A0 being the reference. Then, in the case where it is determined that there is the necessity to start or accelerate the lean vehicle 100, the execution section 22 initiates the second automatic action. The execution section 22 preferably determines that there is the necessity to start or accelerate the lean vehicle 100 in the case where the rider rotates the accelerator grip 120 from the reference state to the second state in the state where the lean vehicle 100 has been brought to the stop by the first automatic action or in the process of bringing the lean vehicle 100 to the stop by the first automatic action. Such a determination is made on the basis of the output of the accelerator grip sensor 17. Here, the execution section 22 may determine whether there is the necessity to start or accelerate the lean vehicle 100 on the basis of the information on another type of the rider's operation of the accelerator grip 120 or on the basis of information on the rider's operation of the device other than the accelerator grip 120.

For example, in at least one of the first automatic action and the second automatic action, the execution section 22 causes the lean vehicle 100 to travel with the vehicle speed change corresponding to the operation state information, which is the information on the operation state by the rider, in the second state where the reference section P0 of the accelerator grip 120 is located within the second angle range θ2 that is located in the second direction D2 with the reference angle A0 being the reference. The execution section 22 preferably sets the deceleration to be generated to the lean vehicle 100 in the first automatic action on the basis of information on the rotational amount or the gradient of the change in the rotational amount at the time when the rider rotates the accelerator grip 120 from the reference state to the second state. More specifically, the execution section 22 sets the higher deceleration as the rotational amount or the gradient of the change in the rotational amount is increased. The execution section 22 preferably sets the acceleration to be generated to the lean vehicle 100 in the second automatic action on the basis of the information on the rotational amount or the gradient of the change in the rotational amount at the time when the rider rotates the accelerator grip 120 from the reference state to the second state. More specifically, the execution section 22 sets the higher acceleration as the rotational amount or the gradient of the change in the rotational amount is increased. The information on the rotational amount or the gradient of the change in the rotational amount is acquired on the basis of the output of the accelerator grip sensor 17.

For example, in at least one of the first automatic action and the second automatic action, the execution section 22 causes the lean vehicle 100 to travel with the vehicle speed change corresponding to the surrounding environment information of the lean vehicle 100 instead of or in addition to the operation state information, which is the information on the operation state by the rider, in the second state where the reference section P0 of the accelerator grip 120 is located within the second angle range θ2 that is located in the second direction D2 with the reference angle A0 being the reference. The surrounding environment information is acquired on the basis of the output of the surrounding environment sensor 11 and/or the communication device 14. The execution section 22 preferably causes the lean vehicle 100 to travel with the vehicle speed change that corresponds to the positional relationship information between the lean vehicle 100 and the preceding vehicle 200 acquired as the surrounding environment information. More specifically, in the first automatic action, when the preceding vehicle 200, which is identified as the target, is present, the execution section 22 decelerates the lean vehicle 100 while controlling the vehicle speed such that the relative distance to or the passing time difference from the preceding vehicle 200 matches a target value, and then brings the lean vehicle 100 to the stop. In addition, more specifically, in the second automatic action, when the preceding vehicle 200, which is identified as the target, is present, the execution section 22 starts or accelerates the lean vehicle 100 while controlling the vehicle speed such that the relative distance to or the passing time difference from the preceding vehicle 200 matches the target value. The execution section 22 preferably causes the lean vehicle 100 to travel with the vehicle speed change that corresponds to the stop line information acquired as the surrounding environment information. More specifically, in the first automatic action, the execution section 22 identifies the presence or the absence and/or the location of the stop line in the absent state of the preceding vehicle 200, which is identified as the target. Then, the execution section 22 decelerates the lean vehicle 100 such that the lean vehicle 100 can be stopped in front of the stop line. In addition, more specifically, in the second automatic action, the execution section 22 identifies the presence or absence and/or the location of the next stop line, and then changes the acceleration to be generated to the lean vehicle 100 according to the result. The execution section 22 preferably causes the lean vehicle 100 to travel with the vehicle speed change that corresponds to the traffic sign information acquired as the surrounding environment information. More specifically, in the first automatic action, the execution section 22 identifies the presence or the absence and/or the location of the traffic sign, which instructs to stop, in the absent state of the preceding vehicle 200 identified as the target. Then, the execution section 22 decelerates the lean vehicle 100 such that the lean vehicle 100 can be stopped in front of the traffic sign. In addition, more specifically, in the second automatic action, the execution section 22 identifies the presence or the absence and/or the location of the next traffic sign that instructs to stop, and then changes the acceleration to be generated to the lean vehicle 100 according to the result. The execution section 22 preferably causes the lean vehicle 100 to travel with the vehicle speed change that corresponds to the traffic light information acquired as the surrounding environment information. More specifically, in the first automatic action, in the absent state of the preceding vehicle 200 identified as the target, the execution section 22 determines whether the traffic light is instructing to stop. Then, the execution section 22 changes a stop position of the lean vehicle 100 according to the determination result. In addition, more specifically, in the second automatic action, the execution section 22 determines whether the next traffic light instructs to stop, and then changes the acceleration to be generated to the lean vehicle 100 according to the determination result. The execution section 22 preferably causes the lean vehicle 100 to travel with the vehicle speed change that corresponds to the traffic information acquired as the surrounding environment information. More specifically, in the first automatic action, the execution section 22 identifies presence or absence and/or a location of an event occurring in the traffic (for example, the traffic jam, the construction work, the accident, or the like), and then changes the stop position of the lean vehicle 100 according to the result. In addition, more specifically, in the second automatic action, the execution section 22 identifies the presence or the absence and/or the location of the event occurring in the traffic (for example, the traffic jam, the construction work, the accident, or the like), and then changes the acceleration to be generated to the lean vehicle 100 according to the result.

For example, in at least one of the first automatic action and the second automatic action, the execution section 22 causes the lean vehicle 100 to travel with the vehicle speed change corresponding to the positional information on the global coordinate system of the lean vehicle 100 instead of or in addition to the operation state information, which is the information on the operation state by the rider, in the second state where the reference section P0 of the accelerator grip 120 is located within the second angle range θ2 that is located in the second direction D2 with the reference angle A0 being the reference. The positional information on the global coordinate system is acquired on the basis of the output of the positioning sensor 15. In the first automatic action and/or the second automatic action, the execution section 22 preferably matches the positional information of the lean vehicle 100 on the global coordinate system against the map information, to which the traffic light information, the stop line information, the traffic sign information, the traffic information, or the like, for example, is reflected. Then, the execution section 22 preferably changes the deceleration and/or the acceleration to be generated to the lean vehicle 100 according to the result.

For example, in at least one of the first automatic action and the second automatic action, the execution section 22 causes the lean vehicle 100 to travel with the vehicle speed change corresponding to the posture information of the lean vehicle 100 instead of or in addition to the operation state information, which is the information on the operation state by the rider, in the second state where the reference section P0 of the accelerator grip 120 is located within the second angle range θ2 that is located in the second direction D2 with the reference angle A0 being the reference. The posture information is acquired on the basis of the output of the vehicle behavior sensor 12. The execution section 22 preferably changes the deceleration and/or the acceleration to be generated to the lean vehicle 100 according to the posture information of the lean vehicle 100. More specifically, in the first automatic action and/or the second automatic action, in the case where the large roll angle or the high roll angular velocity is generated to the lean vehicle 100, the execution section 22 reduces the deceleration and/or the acceleration to be generated to the lean vehicle 100 to be lower than that when the small roll angle or the low roll angular velocity is generated to the lean vehicle 100.

For example, in at least one of the first automatic action and the second automatic action, the execution section 22 causes the lean vehicle 100 to travel with the vehicle speed change corresponding to the setting input information by the rider instead of or in addition to the operation state information, which is the information on the operation state by the rider, in the second state where the reference section P0 of the accelerator grip 120 is located within the second angle range θ2 that is located in the second direction D2 with the reference angle A0 being the reference. The setting input information is acquired on the basis of the output of the setting input device 13. In the first automatic action and/or the second automatic action, the execution section 22 preferably identifies a mode (for example, a comfort mode, a sport mode, or the like) of the lean vehicle 100 selected by the rider, and then preferably differs the deceleration and/or the acceleration to be generated to the lean vehicle 100 according to the result. In the first automatic action and/or the second automatic action, the execution section 22 preferably identifies an upper limit value and/or a lower limit value of the deceleration and/or the acceleration of the lean vehicle 100 that is set and input by the rider, and then preferably changes the deceleration and/or the acceleration to be generated to the lean vehicle 100 according to the result.

For example, in the first automatic action and/or the second automatic action that is executed on the basis of the operation state information, which is the information on the operation state by the rider, in the second state where the reference section P0 of the accelerator grip 120 is located within the second angle range θ2 that is located in the second direction D2 with the reference angle A0 being the reference, in the case where it is determined that safety of the action does not satisfy a standard, the execution section 22 prohibits the action. At a stage prior to the execution of the first automatic action and/or the second automatic action, when it is determined that there is the necessity to generate the deceleration and/or the acceleration exceeding a reference value by the action, the execution section 22 preferably prohibits the execution of the action. During the execution of the first automatic action and/or the second automatic action, when it is determined that the deceleration and/or the acceleration exceeding the reference value is generated, the execution section 22 preferably prohibits continuation of the action. At the stage prior to or during the execution of the first automatic action and/or the second automatic action, when it is determined that the roll angle or the roll angular velocity exceeding a reference value is generated to the lean vehicle 100, the execution section 22 preferably prohibits the action.

For example, in the first automatic action and/or the second automatic action that is executed on the basis of the operation state information, which is the information on the operation state by the rider, in the second state where the reference section P0 of the accelerator grip 120 is located within the second angle range θ2 that is located in the second direction D2 with the reference angle A0 being the reference, in the case where it is determined that the safety of the action does not satisfy the standard, the execution section 22 executes the notification action to notify the rider of the lean vehicle 100 and/or the surrounding vehicle around the lean vehicle 100. At the stage prior to the execution of the first automatic action and/or the second automatic action, when it is determined that there is the necessity to generate the deceleration and/or the acceleration exceeding the reference value by the action, the execution section 22 preferably outputs the control command to the notification device 50 and/or the communication device 14 and executes the notification action. During the execution of the first automatic action and/or the second automatic action, in the case where it is determined that the deceleration and/or the acceleration exceeding the reference value is generated, the execution section 22 preferably outputs the control command to the notification device 50 and/or the communication device 14 and executes the notification action. At the stage prior to or during the execution of the first automatic action and/or the second automatic action, when it is determined that the large roll angle or the high roll angular velocity exceeding the reference value is generated to the lean vehicle 100, the execution section 22 preferably outputs the control command to the notification device 50 and/or the communication device 14 and executes the notification action.

### <Action of Rider-Assistance System>

A description will be made on operation of the rider-assistance system according to the embodiment.

Fig. 5 is a chart illustrating an action flow of the controller in the rider-assistance system according to the embodiment of the invention.

The controller 20 executes the action flow illustrated in Fig. 5 during the travel of the lean vehicle 100.

### (Acquisition Step)

In step S101, the acquisition section 21 acquires the surrounding environment information of the lean vehicle 100. The surrounding environment information includes the positional relationship information between the lean vehicle 100 and the preceding vehicle 200 of the lean vehicle 100. The acquisition section 21 also acquires the various types of the information when necessary.

### (Execution Step)

In step S102, the execution section 22 executes the vehicle speed control action to automatically control the vehicle speed generated to the lean vehicle 100. In the case where it is determined that there is the necessity to stop the traveling lean vehicle 100 in the executed state of the vehicle speed control action, the execution section 22 preferably executes the first automatic action to automatically stop the lean vehicle 100. In the case where it is determined that there is the necessity to start the lean vehicle 100 in the state where the lean vehicle 100 has been brought to the stop, or in the case where it is determined that there is the necessity to accelerate the lean vehicle 100 in the process of bringing the lean vehicle 100 to the stop, the execution section 22 preferably executes the second automatic action to automatically start or accelerate the lean vehicle 100. At least one of the first automatic action and the second automatic action is executed on the basis of the operation state information, which is the information on the operation state by the rider, in the second state where the reference section P0 of the accelerator grip 120 is located within the second angle range θ2 that is located in the second direction D2 with the reference angle A0 being the reference.

### <Effects of Rider-Assistance System>

A description will be made on effects of the rider-assistance system according to the embodiment.

In the rider-assistance system 1, the execution section 22 executes at least one of the first automatic action and the second automatic action on the basis of the operation state information, which is the information on the operation state by the rider, in the second state where the reference section P0 of the accelerator grip 120 is located within the second angle range θ2 that is located in the second direction D2 opposite from the first direction D1 with the reference angle A0 being the reference. The reference section P0 of the accelerator grip 120 is located at the reference angle A0 in the unloaded state by the rider of the lean vehicle 100, and the accelerator grip 120 causes the change in the drive power generated to the lean vehicle 100 when being rotated in the first state where the reference section P0 is located within the first angle range θ1 that is located in the first direction D1 with the reference angle A0 being the reference. Thus, since the rider can easily perform the operation for the action, the assistance performance for the rider can be improved.

In particular, the execution section 22 initiates the first automatic action in the case where it is determined that there is the necessity to stop the lean vehicle 100 on the basis of the operation state information, which is the information on the operation state by the rider, in the second state where the reference section P0 of the accelerator grip 120 is located within the second angle range θ2 that is located in the second direction D2 with the reference angle A0 being the reference. In the case of such a configuration, the rider can easily instruct the initiation of the first automatic action.

In particular, the execution section 22 initiates the second automatic action in the case where it is determined that there is the necessity to start or accelerate the lean vehicle 100 on the basis of the operation state information, which is the information on the operation state by the rider, in the second state where the reference section P0 of the accelerator grip 120 is located within the second angle range θ2 that is located in the second direction D2 with the reference angle A0 being the reference. In the case of such a configuration, the rider can easily instruct the initiation of the second automatic action.

In particular, in the first automatic action and/or the second automatic action, the execution section 22 causes the lean vehicle 100 to travel with the vehicle speed change corresponding to the operation state information, which is the information on the operation state by the rider, in the second state where the reference section P0 of the accelerator grip 120 is located within the second angle range θ2 that is located in the second direction D2 with the reference angle A0 being the reference. In the case of such a configuration, the rider can easily instruct the mode of the first automatic action and/or the second automatic action.

The description has been made so far on the embodiment. However, only a part of the embodiment may be implemented, parts of the embodiment may be combined, or a part of the embodiment may be modified to another aspect. In other words, the invention is not limited to the embodiment that has been described.

For example, the description has been made so far on the case where the vehicle speed of the lean vehicle 100 is automatically controlled on the basis of the surrounding environment information in the vehicle speed control action. However, in the vehicle speed control action, the vehicle speed of the lean vehicle 100 may automatically be controlled not on the basis of the surrounding environment information. In other words, the vehicle speed control action can include so-called cruise control.

For example, the description has been made so far on the case where the execution section 22 executes both of the first automatic action and the second automatic action. However, the execution section 22 may execute only one of the first automatic action and the second automatic action.

### Reference Signs List

- 1:: Rider-assistance system
- 11:: Surrounding environment sensor
- 12:: Vehicle behavior sensor
- 13:: Setting input device
- 14:: Communication device
- 15:: Positioning sensor
- 16:: Brake operation section sensor
- 17:: Accelerator grip sensor
- 20:: Controller
- 21:: Acquisition section
- 22:: Execution section
- 30:: Brake system
- 40:: Drive system
- 50:: Notification device
- 100:: Lean vehicle
- 110:: Brake operation section
- 120:: Accelerator grip
- C:: Axis
- P0:: Reference section
- A0:: Reference angle
- D1:: First direction
- D2:: Second direction
- θ1:: First angle range
- θ2:: Second angle range
- 200:: Another vehicle

## Claims

1. A controller (20) for a rider-assistance system (1) of a lean vehicle (100), the controller comprising:
an execution section (22) that executes vehicle speed control action to automatically control a vehicle speed generated to the lean vehicle (100), wherein
the execution section (22) executes at least one of first automatic action and second automatic action, in the first automatic action, the lean vehicle (100) being automatically stopped, and in the second automatic action, the lean vehicle (100) being automatically started or accelerated,
the first automatic action is action that is executed in the case where it is determined that there is a necessity to stop the traveling lean vehicle (100) in an executed state of the vehicle speed control action,
the second automatic action is action that is executed in the case where it is determined that there is a necessity to start the lean vehicle (100) in a state where the lean vehicle (100) has been brought to a stop, or in the case where it is determined that there is a necessity to accelerate the lean vehicle (100) in a process of bringing the lean vehicle (100) to the stop, and
the execution section (22) executes at least one of the actions on the basis of operation state information, which is information on an operation state by a rider, in a second state where a reference section (P0) of an accelerator grip (120) is located within a second angle range (θ2) that is located in a second direction (D2) opposite from a first direction (D1) with a reference angle (A0) being a reference, the reference section (P0) of the accelerator grip (120) being located at the reference angle (A0) in an unloaded state by the rider of the lean vehicle (100), and the accelerator grip (120) causing a change in drive power generated to the lean vehicle (100) when being rotated in a first state where the reference section (P0) is located within a first angle range (θ1) that is located in the first direction (D1) with the reference angle (A0) being the reference.

2. The controller according to claim 1, wherein
the execution section (22) initiates the first automatic action in the case where it is determined that there is the necessity to stop the lean vehicle (100) on the basis of the operation state information.

3. The controller according to claim 1, wherein
the execution section (22) initiates the second automatic action in the case where it is determined that there is the necessity to start or accelerate the lean vehicle (100) on the basis of the operation state information.

4. The controller according to any one of claims 1 to 3, wherein
in at least one of the actions, the execution section (22) causes the lean vehicle (100) to travel with a vehicle speed change that corresponds to the operation state information.

5. The controller according to any one of claims 1 to 3, wherein
in at least one of the actions, the execution section (22) causes the lean vehicle (100) to travel with a vehicle speed change that corresponds to surrounding environment information of the lean vehicle (100).

6. The controller according to claim 5, wherein
in at least one of the actions, the execution section (22) causes the lean vehicle (100) to travel with a vehicle speed change that corresponds to positional relationship information between the lean vehicle (100) and a preceding vehicle (200), the positional relationship information being acquired as the surrounding environment information.

7. The controller according to claim 5, wherein
in at least one of the actions, the execution section (22) causes the lean vehicle (100) to travel with a vehicle speed change that corresponds to stop line information and/or traffic sign information that is acquired as the surrounding environment information.

8. The controller according to claim 5, wherein
in at least one of the actions, the execution section (22) causes the lean vehicle (100) to travel with a vehicle speed change that corresponds to traffic light information that is acquired as the surrounding environment information.

9. The controller according to claim 5, wherein
in at least one of the actions, the execution section (22) causes the lean vehicle (100) to travel with a vehicle speed change that corresponds to traffic information that is acquired as the surrounding environment information.

10. The controller according to any one of claims 1 to 3, wherein
in at least one of the actions, the execution section (22) causes the lean vehicle (100) to travel with a vehicle speed change that corresponds to positional information of the lean vehicle (100) on a global coordinate system.

11. The controller according to any one of claims 1 to 3, wherein
in at least one of the actions, the execution section (22) causes the lean vehicle (100) to travel with a vehicle speed change that corresponds to posture information of the lean vehicle (100).

12. The controller according to any one of claims 1 to 3, wherein
in at least one of the actions, the execution section (22) causes the lean vehicle (100) to travel with a vehicle speed change that corresponds to setting input information by the rider.

13. The controller according to any one of claims 1 to 3, wherein
in the case where it is determined that safety of at least one of the actions does not satisfy a standard, the execution section (22) prohibits the at least one of the actions.

14. The controller according to any one of claims 1 to 3, wherein
in the case where it is determined that safety of at least one of the actions does not satisfy a standard, the execution section (22) executes notification action for the rider and/or a surrounding vehicle around the lean vehicle (100) .

15. A control method for a rider-assistance system (1) of a lean vehicle (100), the control method comprising:
executing vehicle speed control action by an execution section (22) of a controller (20), in the vehicle speed control action, a vehicle speed generated to the lean vehicle (100) being automatically controlled; and
executing at least one of first automatic action and second automatic action by the execution section (22), in the first automatic action, the lean vehicle (100) being automatically stopped, and in the second automatic action, the lean vehicle (100) being automatically started or accelerated, wherein
the first automatic action is action that is executed in the case where it is determined that there is a necessity to stop the traveling lean vehicle (100) in an executed state of the vehicle speed control action,
the second automatic action is action that is executed in the case where it is determined that there is a necessity to start the lean vehicle (100) in a state where the lean vehicle (100) has been brought to a stop, or in the case where it is determined that there is a necessity to accelerate the lean vehicle (100) in a process of bringing the lean vehicle (100) to the stop, and
the execution section (22) executes at least one of the actions on the basis of operation state information, which is information on an operation state by a rider, in a second state where a reference section (P0) of an accelerator grip (120) is located within a second angle range (θ2) that is located in a second direction (D2) opposite from a first direction (D1) with a reference angle (A0) being a reference, the reference section (P0) of the accelerator grip (120) being located at the reference angle (A0) in an unloaded state by the rider of the lean vehicle (100), and the accelerator grip (120) changing drive power generated to the lean vehicle (100) when being rotated in a first state where the reference section (P0) is located within a first angle range (θ1) that is located in the first direction (D1) with the reference angle (A0) being the reference.
